# EUROPÄISCHE PATENTSCHRIFT

(11) **EP 4 303 075 B1**
(45) Veröffentlichungstag und Bekanntmachung des Hinweises auf die Patenterteilung: **29.01.2025**
(21) Anmeldenummer: 23179411.6
(22) Anmeldetag: 15.06.2023
(51) Int. Cl.: B60Q 1/30, B60P 1/44

(54) **HUBLADEBÜHNE FÜR FAHRZEUGE**
LOADING TAILGATE FOR VEHICLES
HAYON ÉLÉVATEUR POUR VÉHICULES

(30) Priorität: 08.07.2022 DE 102022117109; 24.08.2022 DE 102022121438
(43) Veröffentlichungstag der Anmeldung: 10.01.2024
(73) Patentinhaber: Palfinger Tail Lifts GmbH, 27777 Ganderkesee (DE)
(72) Erfinder: Larisch, Roman, 28816 Stuhr (DE)
(74) Vertreter: Hoener, Matthias

(56) Entgegenhaltungen:
- EP-A1- 3 892 495
- DE-A1- 19 517 827
- DE-A1- 3 623 248
- JP-A- 2017 030 628
- JP-A- 2019 006 246
- JP-B2- 7 090 990

## Beschreibung

Die Erfindung betrifft eine Hubladebühne für ein Fahrzeug mit einer Ladeplattform.

Zum Erleichtern des Be- und Entladens von Fahrzeugen, insbesondere Lkw's und/oder deren Anhänger, dienen Hubladebühnen. Diese verfügen über jeweils eine von einem Hubwerk heb-, senk- und schwenkbare Ladeplattform. Die Ladeplattform ermöglicht es, Gegenstände von einem höheren Niveau, beispielsweise dem Niveau eines Laderaumbodens des Fahrzeugs oder gegebenenfalls auch darüber, auf den Boden abzusenken und umgekehrt anzuheben.

Vor allem in einer heruntergeklappten und angehobenen Stellung der Ladeplattform besteht die Gefahr, dass auf der Plattform tätige Personen über die Seitenränder der Ladeplattform hinausgelangen und so von der Ladeplattform herunterstürzen. Außerdem stellt die heruntergeschwenkte und angehobene Ladeplattform ein Hindernis für sich in der Nähe derselben befindliche Personen dar. Die vorstehend genannten Sicherheitsprobleme bestehen besonders bei schlechter Sicht und Dunkelheit.

Es sind schon Hubladebühnen bekannt, die auf ihrer Nutzfläche mit Warnleuchten versehen sind. Diese haben sich aber als noch unzureichend erwiesen.

Eine Hubladebühne für ein Fahrzeug mit einer Ladeplattform und einem Hubwerk zum wahlweisen Heben, Senken und Verschwenken der Ladeplattform ist aus JP 2017 030628 A bekannt.

Ausgehend vom Vorstehenden liegt der Erfindung die Aufgabe zugrunde, eine Hubladebühne für ein Fahrzeug zu schaffen, die vor allem bei schlechter Sicht und Dunkelheit mehr Sicherheit bietet.

Eine Hubladebühne zur Lösung der eingangs genannten Aufgabe weist die Merkmale des Anspruchs 1 auf. Demnach ist es vorgesehen, neben den Seiten der Ladeplattform, neben jedem Seitenrand der Deckwandung der Ladeplattform, eine Leuchteinrichtung vorzusehen. Insbesondere sind die Leuchteinrichtungen Bestandteil der Ladeplattform. Die Leuchteinrichtungen sind zur Erzeugung eines mindestens nach oben leuchtenden horizontalen Randstreifen und/oder wenigstens nach oben gerichteten Licht abstrahlenden Randstreifens ausgebildet. Diese Randstreifen stellen dadurch bevorzugt Leuchtstreifen an und/oder neben den Rändern der Nutzfläche der Ladeplattform dar.

Es ist vorgesehen, an jedem der gegenüberliegenden und quer zur Schwenkachse der Ladeplattform verlaufenden Seitenrändern der Deckwandung einen Leuchtmittelträger mit einem leistenartigen und/oder kappenartigen Halter für ein jeweiliges Leuchtmittel anzuordnen.

Der Leuchtmittelträger weist zusätzlich zum jeweiligen leistenartigen oder kappenartigen Halter eine Trägerleiste auf. Dann weist der Leuchtmittelträger den Halter und die Trägerleiste auf. Die Leuchteinrichtung besteht dann aus dem Leuchtmittelträger mit dem Halter und der Trägerleiste und mindestens einem Leuchtmittel, das bevorzugt von der Trägerleiste getragen ist oder der Trägerleiste zugeordnet und/oder hierauf befestigt ist.

Die leuchtenden und/oder beleuchteten Randstreifen und/ oder horizontalen Leuchtstreifen befinden sich neben den Seitenrändern der Deckwandung der Ladeplattform. Die Ebenen der sich auf beiden Seiten neben der Nutzfläche der Ladeplattform befindenden leuchtenden Randstreifen und/oder Leuchtstreifen entsprechen der Ebene der Nutzfläche und/oder Deckwandung oder liegen mit einem parallelen Versatz oberhalb der Ebene der Deckwandung bzw. Nutzfläche der Ladeplattform.

Bevorzugt ist es, dass der beleuchtete Randstreifen und/oder Leuchtstreifen auf gegenüberliegenden Längsseiten neben der Nutzfläche der Ladeplattform liegt. Es ist aber auch denkbar, dass die beleuchteten Randstreifen und/oder Leuchtstreifen äußere gegenüberliegende Randbereiche, vorzugsweise Längsrandbereiche, der Nutzfläche der Ladeplattform bilden.

Bevorzugt ist der jeweilige Leuchtmittelträger derart ausgebildet, dass sich die Leuchteinrichtung und vorzugsweise mindestens das wenigstens eine Leuchtmittel derselben seitlich neben einem jeweiligen Längsrand der Ladeplattform, insbesondere ihrer Nutzfläche und/oder Deckwandung, befinden. So können die leuchtenden Randstreifen ohne oder mit nur einfachen, insbesondere ausschließlich nachträglichen, Veränderung herkömmlicher Ladeplattformen geschaffen werden und lassen sich auch nachrüsten.

Es ist ein Leuchtmittelträger mit dem kappenartigen Halter für die Leuchteinrichtung denkbar, mit dem die jeweilige Leuchteinrichtung auf jeder Seite der Ladeplattform angeordnet werden kann, insbesondere diese Anordnung sich neben den Seitenrändern der Deckwandung und der Bodenwandung der Ladeplattform befinden kann. Bei einem solchen kappenartigen Halter ist es auch denkbar, dass die jeweilige Leuchteinrichtung auch vertikale Seiten der Hubladebühne mindestens teilweise beleuchtet, ohne diese Beleuchtung durch separate Leuchteinrichtungen vornehmen zu müssen.

Gemäß einer bevorzugten Ausgestaltung der Hubladebühne ist es vorgesehen, dass der jeweilige Leuchtmittelträger mit seinem leistenartigen bzw. kappenartigen Halter auf jeder Seite der Ladeplattform mit der Deckwandung derselben verbunden ist. Dadurch lässt sich die jeweilige Leuchteinrichtung mit ihrem Leuchtmittelträger an und/oder neben jeder Seite der Ladeplattform, insbesondere ihrer Deckwandung und/oder ihrer Bodenwandung, verbinden, ohne dass dazu grundsätzliche und/oder aufwändige Veränderungen der Ladeplattform erforderlich sind.

Erfindungsgemäß ist die Trägerleiste mit dem leistenartigen oder kappenartigen Halter lösbar verbunden ist. Diese Verbindung kann als eine Steckverbindung, Rastverbindung oder Schnappverbindung ausgebildet sein. Nach Herstellung dieser lösbaren Verbindung bilden der leisten- oder kappenartige Halter und die damit lösbar verbundene Trägerleiste zusammen den Leuchtmittelträger für das mindestens eine Leuchtmittel der Leuchteinrichtung. Infolge der lösbaren Verbindung der das mindestens eine Leuchtmittel aufweisenden und/oder tragenden Trägerleiste mit dem jeweiligen Halter lässt sich das mindestens eine Leuchtmittel zusammen mit der Trägerleiste am Halter montieren und zu Reparaturzwecken, beispielsweise den Austausch mindestens eines Leuchtmittels, demontieren durch Trennen der lösbaren Verbindung des das jeweilige Leuchtmittel aufweisenden Trägers vom Halter.

Alternativ kann die jeweilige vorstehend genannte lösbare Verbindung durch z. B. Kleben gesichert sein. Eine solche Verbindung ist dann zwar nicht oder zumindest nicht so leicht lösbar, kann aber gleichwohl leicht erfolgen.

Der Leuchtmittelträger kann so ausgebildet sein, dass der jeweilige Halter und die damit verbundene Trägerleiste einen das wenigstens eine Leuchtmittel mindestens dreiseitig umgebenden Aufnahmeraum auf jeder Seite neben der Ladeplattform und/oder neben jedem Seitenrand der Deckwandung derselben bilden. In diesem Aufnahmeraum ist das wenigstens eine Leuchtmittel geschützt untergebracht. Das vom jeweiligen Leuchtmittel ausgestrahlte Licht kann durch mindestens einen Teil des Halters und gegebenenfalls auch der Trägerleiste hindurchleuchten. Zumindest sendet das jeweilige Leuchtmittel nach oben gerichtete Strahlen ab, die durch einen Teil des Halters nach oben hindurchleuchten und so die horizontalen Randstreifen auf beiden Seiten der Deckwandung der Ladeplattform und/oder der Nutzfläche derselben zum Leuchten bringen. Die Randstreifen bilden so flachliegend horizontale Lichtstreifen, die Personen auf der Nutzfläche der Ladeplattform als beleuchtet bzw. indirekt beleuchtet wahrnehmen. Für die Personen stellt der beleuchtete Randstreifen sozusagen eine schmale Mattscheibe oder Streuscheibe dar, die die Fußräume der Personen von unten anstrahlt.

Bevorzugt verfügt jeder Halter über mindestens einen oberen, parallel zur Deckwandung und/oder Nutzfläche verlaufenden Schenkel, der mit einem Teil auf jeweils einem randseitigen Streifen der Deckwandung und/oder der Nutzfläche der Ladeplattform aufliegt und hiermit verbunden ist und mit einem anderen, äußeren Teil seitlich gegenüber dem Seitenrand der Deckwandung der Ladeplattform vorsteht. Unter dem äußeren, seitlich vorstehenden Teil des oberen Schenkels des jeweiligen Halters ist die Trägerleiste mit mindestens einem ihr zugeordneten Leuchtmittel angeordnet. Auf diese Weise kommt die seitliche Anordnung des jeweiligen Leuchtmittels neben dem Seitenrand der Deckwandung der Ladeplattform zustande, und zwar vorzugsweise ohne dass dazu in der Ladeplattform Platz für die Unterbringung des jeweiligen Leuchtmittels geschaffen werden muss.

Erfindungsgemäß ist es vorgesehen, den jeweiligen Halter wenigstens teilweise lichtdurchlässig auszubilden. Dazu kann es vorgesehen sein, den Halter vollständig aus einem lichtdurchlässigen Material, insbesondere einem lichtdurchlässigen Kunststoff, zu bilden.

Bevorzugt sind die Leuchtmittelträger oder zumindest die Halter derselben nur teillichtdurchlässig ausgebildet, so dass sie eine matte Streuscheibe bilden, wodurch für den Betrachter auf der Oberseite bzw. Nutzseite der Ladeplattform der Randstreifen einen gleichmäßig beleuchteten, aber die Person nicht blendenden Leuchtstreifen bildet, der die ihm zugeordnete Warnfunktion wahrnimmt. Das aus dem durchscheinenden Teil des Leuchtmittelträgers, insbesondere des Halters, nach oben in Richtung zum Betrachter auf der Ladeplattform austretende Licht nimmt deshalb die gewünschte Warn- oder Hinweisfunktionen wahr, ohne Personen auf der Ladeplattform zu blenden.

Jede Leuchteinrichtung der Hubladebühne verfügt bevorzugt über eine Vielzahl von Leuchtmitteln. Beispielsweise können die Leuchtmittel in mindestens einer geometrischen Reihe von mit vorzugsweise gleichen Abständen aufeinanderfolgende, insbesondere dicht aufeinanderfolgende, Leuchtmittel aufweisen. Eine solche Leuchteinrichtung verfügt dann über mindestens eine Kette zur Bildung jeweils eines Leuchtstreifens. Die aufeinanderfolgenden Leuchtmittel sind bevorzugt von aufeinanderfolgenden Leuchtdioden gebildet. Alternativ ist es auch denkbar, das Leuchtmittel nicht aus Leuchtdioden, sondern aus konventionellen Glühlampen, insbesondere kleinen Glühlämpchen, zu bilden. Es ist alternativ auch denkbar, dass jede Leuchteinrichtung mindestens ein Leuchtmittel und einen Lichtleitkörper aufweist, wobei das mindestens eine Leuchtmittel Licht in den vorzugsweise länglichen und/oder streifenförmigen Lichtleiter einleitet.

Gemäß einer vorteilhaften Ausgestaltungsmöglichkeit der Leuchteinrichtung ist es vorgesehen, dass das jeweilige kettenartige Leuchtmittel mit aneinandergereihten Lichtquellen, vorzugsweise Leuchtdioden, oder der Lichtleiter durchgehend über die gesamte Länge des Leuchtmittelträgers der jeweiligen Leuchteinrichtung verläuft. Vorzugsweise erstreckt sich dann die Trägerleiste mit dem mindestens einem ihm zugeordneten Leuchtstreifen oder Lichtleiter durchgehend über die gesamte Seite der Ladeplattform, insbesondere die gesamte Länge des Seitenrands der Deckwandung, wobei gegebenenfalls die Plattformspitze im hinteren Endbereich der Ladeplattform und/oder der Plattformträger am vorderen (fahrzeugseitigen) Endbereich der Ladeplattform hiervon ausgenommen sein können. Das führt dazu, dass mindestens ein Teil eines Randstreifens neben der Deckwandung der Ladeplattform von unten angeleuchtet wird und somit von Personen auf der Ladeplattform als ein heller Leuchtstreifen erscheint. Dieser leuchtende, helle Randstreifen bzw. Leuchtstreifen auf jeder Seite der Ladeplattform befindet sich auf beiden Seiten der Nutzfläche der Ladeplattform, indem er sich neben gegenüberliegenden Seiten der Nutzfläche befindet oder auch äußere Teile der Nutzfläche bildet.

Bevorzugte Ausführungsbeispiele der Erfindung werden nachfolgend anhand der Zeichnung näher erläutert. In dieser zeigen:
- Fig. 1: eine perspektivische Darstellung eines hinteren Teils eines Fahrzeugs mit einer daran montierten Hubladebühne bei heruntergeschwenkter (aufgeklappter) und abgesenkter Ladeplattform,
- Fig. 2: ein Querschnitt quer zur Fahrtrichtung des Fahrzeugs durch einen rechten Teil der Ladeplattform mit einer außenseitig daran befestigten erfindungsgemäßen Leuchteinrichtung,
- Fig. 3: eine Stirnansicht eines leistenartigen Halters der Leuchteinrichtung,
- Fig. 4: eine Stirnansicht einer Trägerleiste der Leuchteinrichtung,
- Fig. 5: eine Draufsicht auf eine Ladeplattform eines zweiten Ausführungsbeispiels der Hubladebühne,
- Fig. 6: einen Querschnitt durch einen rechten Teil der Ladeplattform der Fig. 5,
- Fig. 7: eine Stirnansicht eines kappenartigen Halters der Leuchteinrichtung der Fig. 6, und
- Fig. 8: eine Stirnansicht einer Trägerleiste der in der Fig. 6 dargestellten Leuchteinrichtung.

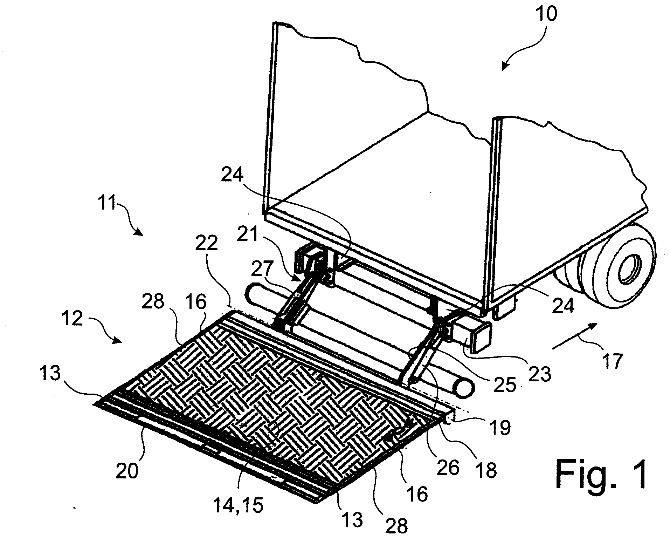

Die Fig. 1 zeigt einen hinteren Teil eines Fahrzeugs, und zwar eine Rückseite eines Fahrzeugaufbaus 10. Beim Fahrzeug kann es sich um einen Lkw, Klein-Lkw, einen Anhänger, einen Sattelauflieger oder sonstige Transportfahrzeuge handeln.

An der Rückseite des Fahrzeugaufbaus 10 ist eine Hubladebühne 11 montiert. Die Hubladebühne 11 verfügt über eine flächige Ladeplattform 12 mit einer rechteckigen Grundfläche. Üblicherweise entspricht die Grundfläche der Breite des Fahrzeugs, wobei die Länge der Ladeplattform 12 in Fahrtrichtung 17 des Fahrzeugs gesehen etwas geringer als die Breite sein kann. Es sind aber auch Sonderbauformen von Hubladebühnen denkbar, bei denen Ladeplattformen schmaler als die Breite des Fahrzeugaufbaus 10 sind oder auch die Hubladebühne 11 in einer Seitenwand oder von außen vor einer Tür bzw. Klappe in der Seitenwand montiert ist.

Von der Seite her gesehen verfügt die Ladeplattform mindestens in ihrem hinteren Bereich über einen keilförmigen Querschnitt. Eine obere, ebene Nutzfläche 14 der Ladeplattform wird von einer ebenen Deckwandung 15 der Ladeplattform 12 gebildet. Die Nutzfläche 14 kann sich über die gesamte Fläche der Deckwandung 15 erstrecken. Alternativ ist es denkbar, dass schmale äußere streifenförmige Abschnitte der Deckwandung 15 nicht als Nutzfläche dienen. Dann ist die Nutzfläche 14 etwas schmaler als die Deckwandung 15 der Ladeplattform.

Bei der in der Fig. 1 gezeigten Hubladebühne 11 an der Rückseite des Fahrzeugaufbaus 10 verlaufen äußere Seiten 16 der Ladeplattform 12 parallel zur Fahrtrichtung 17 des Fahrzeugs. Bei einer einer Seitenwand des Fahrzeugaufbaus 10 zugeordneten Hubladebühne verlaufen gegenüberliegende Seiten 16 der Ladeplattform 12 quer zur Fahrtrichtung 17.

Eine zur Rückseite des Fahrzeugaufbaus 10 weisende vordere Querkante 18 der Ladeplattform 12 ist mit einem quergerichteten Plattformträger 19 versehen, der vorzugsweise integraler Bestandteil der Ladeplattform 12 ist. Alternativ ist es aber auch denkbar, dass der balkenartige Plattformträger 19 als separates Bauteil mit der Ladeplattform 12 verbunden ist.

Ein der vorderen Querkante 18 gegenüberliegender Endbereich der Ladeplattform 12 ist als eine sogenannte Plattformspitze ausgebildet. Mindestens in diesem Bereich ist die Ladeplattform leicht keilartig ausgebildet, indem sie eine freie, hintere Querkante 20 bildet (Fig. 1).

Des Weiteren verfügt die Hubladebühne 11 über ein Hubwerk 21 zum Heben, Senken und/oder Verschwenken der Ladeplattform 12. Das Hubwerk 21 ist um eine Schwenkachse 22, die im gezeigten Ausführungsbeispiel bei am Heck des Fahrzeugs montierter Hubladebühne 11 quer zur Fahrtrichtung 17 verläuft, verschwenkbar. Das Hubwerk 21 ist mit einem quer zur Fahrtrichtung 17 verlaufend am Chassis des Fahrzeugs angeordneten Tragrohr 23 verbunden. Alternativ kann das Hubwerk 21 auch direkt an Längsträgern 24 des Chassis des Fahrzeugs montiert sein. Das Hubwerk 21 verfügt über zwei beabstandete und gleichsam (synchron) verschwenkbare Lenkerarme 25, die in zwei parallel in Fahrtrichtung 17 verlaufenden vertikalen Ebenen liegen. Die Lenkerarme 25 sind an einem Ende um die Schwenkachse 22 schwenkbar mit der Ladeplattform 12, insbesondere ihrem Plattformträger 19, verbunden und am anderen Ende schwenkbar um eine parallel zur Schwenkachse 22 verlaufende horizontale Achse entweder am Tragrohr 23 oder direkt an den Längsträgern 24 des Chassis des Fahrzeugs angelenkt.

Das Hubwerk weist des Weiteren wenigstens einen oder zwei Hydraulikzylinder 26 zum Heben und Senken der Ladeplattform 12 und mindestens einen oder auch zwei Hydraulikzylinder 27 zum Verschwenken der Ladeplattform 12 auf. Die Hydraulikzylinder 26 und 27 sind ihrer Funktion entsprechend (Heben/Senken bzw. Verschwenken) an mindestens einem Lenkerarm 25, dem Plattformträger 19, dem Tragrohr 23 und/oder mindestens einem Längsträger 24 angelenkt.

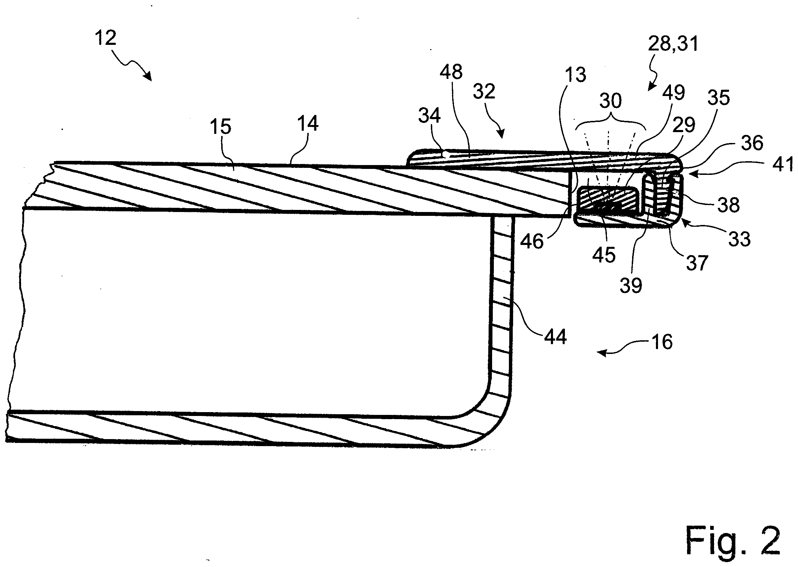

Die Fig. 2 zeigt zusätzlich zur Deckwandung 15 noch die darunter angeordnete, insbesondere mit der Deckwandung 15 verschweißte tragende Struktur 44 der Ladeplattform 12.

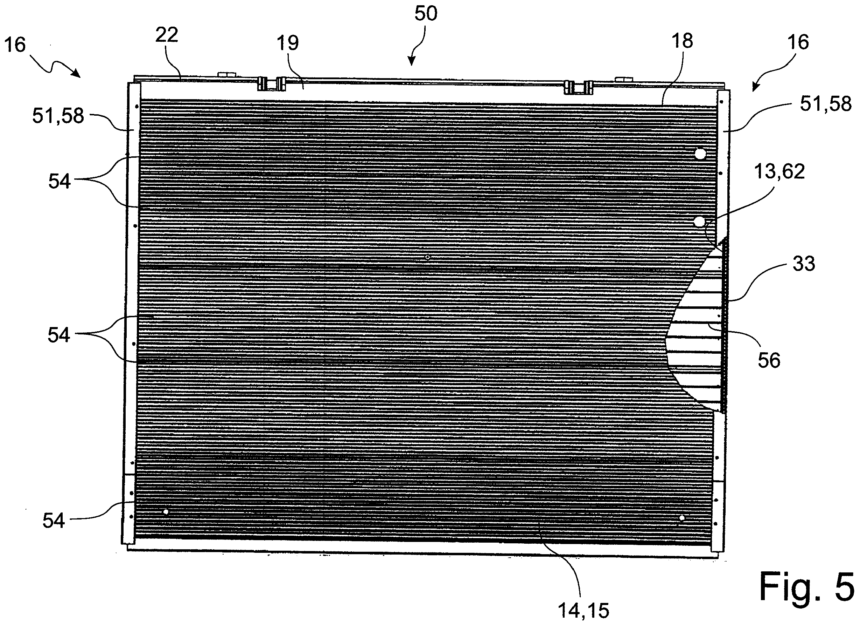

Der Ladeplattform 12 der Fig. 1 bis 4 und der Ladeplattform 50 der Fig. 5 bis 8 ist an jeder der beiden quer zur Schwenkachse 22 verlaufenden Seiten 16 eine Leuchteinrichtung 28 bzw. 51 zugeordnet. Die Leuchteinrichtungen 28 oder 51 auf jeder Seite 16 der Ladeplattform 12 oder 50 sind gleich ausgebildet. Die Leuchteinrichtungen 28 bzw. 51 sind bevorzugt auf einer Seite 16 zumindest teilweise spiegelverkehrt bzw. umgedreht zur gegenüberliegenden Seite 16 angeordnet. Die Leuchteinrichtungen 28 bzw. 51 sind mit der jeweiligen Ladeplattform 12 bzw. 50 verbunden, so dass jede Ladeplattform 12 und 50 zwei gleiche Leuchteinrichtungen 28 bzw. 51 aufweist.

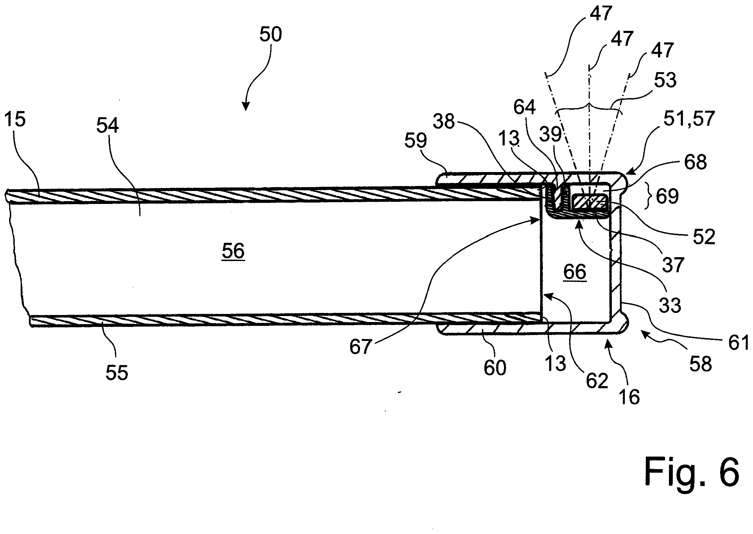

Die Anordnung der Leuchteinrichtungen 28, 51 auf gegenüberliegenden Seiten 16 der Ladeplattform 12, 50 ist so getroffen, dass mindestens das jeweilige Leuchtmittel 29, 52 seitlich neben dem jeweiligen Seitenrand 13 der Deckwandung 15 bzw. ihrer Nutzfläche 14 der jeweiligen Ladeplattform 12, 50 liegt. Dadurch werden horizontale leuchtende Randstreifen, insbesondere horizontale Leuchtstreifen 30, 53, auf jeder Seite 16 neben der Deckwandung 15 und/oder Nutzfläche 14 der betreffenden Ladeplattform 12, 50 gebildet. Diese horizontalen Leuchtstreifen 30, 53 liegen in einer Ebene, die in den gezeigten Ausführungsbeispielen (Fig. 1 und 6) mit etwas Abstand parallel über der Oberseite der horizontalen Deckwandung 15 und/oder der horizontalen Nutzfläche 14 liegen. Es sind aber auch abgewandelte Ausführungsbeispiele denkbar, bei denen die leuchtenden bzw. beleuchteten oder durchleuchteten Leuchtstreifen 30, 53 in der Ebene der Oberseite der Deckwandung 15 und/oder Nutzfläche 14 liegen.

Nachfolgend wird die auf beiden Seiten 16 der Ladeplattform 12 gleiche Leuchteinrichtung 28 der in den Fig. 1 bis 4 dargestellten Hubladebühne, insbesondere ihrer Ladeplattform 12, beschrieben:
Die in der Fig. 2 gezeigte Leuchteinrichtung 28 verfügt über einen Leuchtmittelträger 31 und mindestens ein Leuchtmittel 29. Der Leuchtmittelträger 31 weist einen leistenartigen Halter 32 und eine Trägerleiste 33 auf. Der Trägerleiste 33 ist das mindestens eine Leuchtmittel 29 der Leuchteinrichtung 28 zugeordnet. Der leistenartige Halter 32 und die Trägerleiste 33 des Leuchtmittelträgers 31 sind bevorzugt gleich lang oder mindestens annähernd gleich lang und erstrecken sich entweder über die gesamte Länge jedes Seitenrands 13 der Deckwandung 15 der Ladeplattform 12 oder nur einen Teil der Länge des jeweiligen Seitenrands 13. Vorzugsweise ist der Leuchtmittelträger 31 an jeder Seite 16 der Ladeplattform 12 kürzer, indem er vor der hinteren Querkante 20 der Deckwandung 15 endet und sich dadurch nicht über den Bereich der Plattformspitze erstreckt. Im Ausführungsbeispiel der Fig. 1 erstrecken sich die Leuchteinrichtungen 28 bis zur hinteren Querkante 20. Dann erstrecken sich die Leuchteinrichtungen 28 auch über die Plattformspitze, wozu in diesem Bereich die Leuchteinrichtungen 28 keilförmig ausgebildet sind und sich so verjüngend bis zur hinteren Querkante 20 erstrecken.

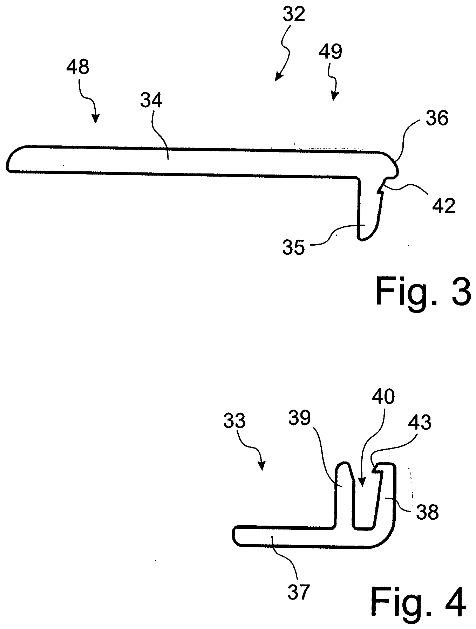

Der leistenartige Halter 32 (Fig. 3) verfügt über einen horizontalen Schenkel 34 und einen kürzeren vertikalen Schenkel 35. Der kürzere Schenkel 35 geht von einer Unterseite des längeren horizontalen Schenkels 34 aus und ist im gezeigten Ausführungsbeispiel etwas von einer freien, äußeren Längskante 36 des längeren horizontalen Schenkels 34 beabstandet. Beide Schenkel 34 und 35 des leistenartigen Halters 32 sind einstückig miteinander verbunden, indem der leistenartige Halter 32 einstückig aus beispielsweise Kunststoff im Extrusionsverfahren hergestellt ist.

Die Trägerleiste 33 (Fig. 4) verfügt über einen horizontalen Schenkel 37 und zwei parallele vertikale Schenkel 38, 39, die gegenüber dem horizontalen Schenkel 37 hochstehen. Ein äußerer vertikaler Schenkel 38 geht von einem äußeren Rand des horizontalen Schenkels 37 der Trägerleiste 33 aus. Der zum äußeren Schenkel 38 nach innen versetzte vertikale Schenkel 39 weist einen Abstand zum äußeren vertikalen Schenkel 38 auf, so dass zwischen den Schenkeln 38 und 39 ein Zwischenraum 40 entsteht, dessen Breite mit der Breite des kürzeren vertikalen Schenkels 35 des leistenartigen Halters 32 korrespondiert, vorzugsweise etwas größer ist. Die beiden vertikalen Schenkel 38 und 39 der Trägerleiste 33 sind gleich hoch. Außerdem ist die Tiefe des Zwischenraums 40 zwischen den Schenkeln 38 und 39 etwa so groß, vorzugsweise geringfügig größer, als die Höhe des vertikalen Schenkels 35 des leistenartigen Halters 32.

Die Trägerleiste 33 ist mit dem leistenartigen Halter 32 verbindbar, insbesondere zusammensteckbar, indem die Trägerleiste 33 von unten gegen den leistenartigen Halter 32 bewegt wird und dabei der vertikale Schenkel 34 des leistenartigen Halters 32 in den Zwischenraum 40 zwischen den beiden etwas voneinander beabstandeten vertikalen Schenkeln 38 und 39 der Trägerleiste 33 eingesteckt wird. Der leistenartige Halter 32 und die Trägerleiste 33 sind so ausgebildet, dass ihr zusammengesteckter Zustand durch eine vorzugsweise lösbare Rastverbindung 41 fixierbar und/oder arretierbar ist. Zu diesem Zweck weist unter dem langen horizontalen Schenkel 34 eine Außenseite des vertikalen Schenkels 35 des leistenartigen Halters 32 eine Vertiefung 42 auf. Demgegenüber weist der äußere vertikale Schenkel 38 der Trägerleiste 33 an seiner Innenseite eine mit der Vertiefung 42 korrespondierende Rastnase 43 auf. Die Rastverbindung 41 kommt durch elastische Verformung des äußeren vertikalen Schenkels 38 der Trägerleiste 33 zustande, wenn diese auf den vertikalen Schenkel 35 des leistenartigen Halters 32 aufgeschoben wird. Diese elastische Verformung wird nach Einrasten der Rastnase 43 in die Vertiefung 42 ganz oder vorzugsweise nur teilweise rückgängig gemacht und dadurch die Rastverbindung 41 geschlossen. Durch Auseinanderbiegen der parallelen Schenkel 38 und 39 der Trägerleiste 33 kann die Rastverbindung 41 der Trägerleiste 33 mit dem leistenartigen Halter 32 wieder gelöst werden, sofern die Steck- oder Rastverbindung nicht noch verklebt ist.

In den Figuren sind die Rastnasen 43 hakenartig ausgebildet. Sie können aber auch andere Querschnitte aufweisen, beispielsweise halbrunde oder rechteckige Querschnitte aufweisen. Dann sind die Vertiefungen 42 dazu korrespondierend ausgebildet.

Die Fig. 2 lässt einen bei mit dem leistenartigen Halter 32 zusammengesteckte Trägerleiste 33 sich im und/oder vom Leuchtmittelträger 31 gebildeten Aufnahmeraum 45 erkennen. Dieser Aufnahmeraum 45 verläuft durchgehend außen am in Längsrichtung der Ladeplattform 12 verlaufenden Seitenrand 13 der Deckwandung 15. Diese Deckwandung 15 begrenzt eine Seite des Aufnahmeraums 45. Eine gegenüberliegende Seite des Aufnahmeraums 45 wird vom inneren vertikalen Schenkel 39 der Trägerleiste 33 begrenzt. Der horizontale Schenkel 37 der Trägerleiste 33 begrenzt die Unterseite des Aufnahmeraums 45, während die obere Seite des Aufnahmeraums 45 vom äußeren Teil des horizontalen Schenkels 34 des leistenartigen Halters 32 begrenzt wird.

Im Aufnahmeraum 45 befindet sich das Leuchtmittel 29 der Leuchteinrichtung 28. Dieses Leuchtmittel 29 ist als ein länglicher, durchgehender Leuchtstreifen 30 ausgebildet, der sich in Längsrichtung des Aufnahmeraums 45 außen neben dem Seitenrand 13 der Deckwandung 15 durchgehend erstreckt. Das gezeigte Leuchtmittel 29 verfügt über eine Vielzahl von in Längsrichtung des streifen- oder leistenartigen Leuchtmittels 29 aufeinanderfolgenden Lichterzeugern, beispielsweise Leuchtdioden. Beim gezeigten Leuchtmittel 29 ist eine parallel zum Seitenrand 13 verlaufende Reihe mit gleichmäßigem geringen Abstand aufeinanderfolgenden Leuchtdioden oder sonstigen Licht erzeugenden und/oder abstrahlenden Lichtquellen vorgesehen. Hierauf ist die Erfindung aber nicht beschränkt; vielmehr können abweichend von den Darstellungen in den Figuren auch mehrere Reihen aufeinanderfolgender Leuchtdioden vorgesehen sein.

Beim gezeigten Leuchtmittel 29 sind die Lichtquellen, insbesondere sämtliche in Längsrichtung aufeinanderfolgende und nebeneinanderliegende Leuchtdioden oder sonstige Lichtquellen in einen zumindest durchsichtigen, insbesondere klarsichtigen, Lichtleitkörper 46 eingegossen. Dieser weist im gezeigten Ausführungsbeispiel einen etwa rechteckförmigen Querschnitt auf, wobei seine Breite zwischen dem Seitenrand 13 der Deckwandung 15 und dem inneren Schenkel 39 der Trägerleiste 33 größer ist als seine Höhe. Es ist aber auch denkbar, den streifenförmigen oder leistenförmigen Lichtleitkörper 46 mit anderen Querschnitten zu versehen, insbesondere derart, dass er linsenartig Licht abstrahlt, insbesondere divergierende Lichtstrahlen 47, von denen in der Fig. 2 andeutungsweise drei Lichtstrahlen punkt-strich-liniert dargestellt sind. Es ist auch denkbar, dass mindestens die zur Unterseite des horizontalen Schenkels 34 des leistenartigen Halters 32 weisende obere Deckfläche des Lichtleitkörpers 46 profiliert ist zur Erzielung einer gewünschten Lichtverteilung, insbesondere eine homogene Lichtverteilung trotz des im Lichtleitkörper 46 eingebetteten Rasters an beabstandeten Leuchtdioden oder sonstigen Lichtquellen. Es ist weiterhin auch denkbar, die oder alle Leuchtdioden oder sonstige Lichtquellen auf einer streifenartigen Trägerfolie anzuordnen. Dann kann gegebenenfalls der Lichtleitkörper 46 entfallen.

Das Leuchtmittel 29 ist mit einer Unterseite des Lichtleitkörpers 46 auf einer den Aufnahmeraum 45 unten begrenzenden innenliegenden Seite des horizontalen Schenkels 37 der Trägerleiste 33 befestigt. Diese Befestigung erfolgt bevorzugt lösbar. Die Verbindung kann aber auch dauerhaft sein.

Der streifenartige horizontale Schenkel 34 des leistenartigen Halters 32 ist breiter als sein seitlicher Überstand gegenüber dem Seitenrand 13 der Deckwandung 15 der Ladeplattform 12. Dadurch überlappt ein innenliegender, zur Mitte der Ladeplattform 12 gerichteter Teil 48 des horizontalen Schenkels 34 die Oberseite der Deckwandung 15 und/oder der Nutzfläche 14. Ein zweiter äußerer Teil 49 des horizontalen Schenkels 34 des leistenartigen Halters 32 hingegen ragt gegenüber dem Seitenrand 13 der Deckwandung 15 seitlich nach außen vor. Im gezeigten Ausführungsbeispiel (Fig. 2) sind die Teile 48 und 49 des horizontalen Schenkels 34 etwa gleich breit. Je nach der gewünschten Breite des Leuchtstreifens 30 kann der äußere Teil 49 des horizontalen Schenkels 34 mehr oder weniger weit seitlich gegenüber dem Seitenrand 13 der Deckwandung 15 vorstehen. Dementsprechend kann das Leuchtmittel 29, insbesondere der Lichtleitkörper 46 desselben, breiter oder schmaler sein als in der Fig. 2 dargestellt, indem sich die Breite des Aufnahmeraums 45 entsprechend ändert.

Befestigt ist die Leuchteinrichtung 28 mit dem die Deckwandung 15 überlappenden inneren Teil 48 des horizontalen Schenkels 34 des leistenartigen Halters 33 des Leuchtmittelträgers 31 und/oder der Leuchteinrichtung 28 mit der Deckwandung 15 der Ladeplattform 12 durch in der Fig. 2 nicht gezeigte Schraubverbindungen, Nieten, Kleben oder sonstige gängige Verbindungstechniken. Diese Verbindung der Leuchteinrichtung 28 mit der oder an der Ladeplattform 12 kann je nachdem, welches Verbindungsmittel eingesetzt wird, lösbar oder auch unlösbar sein.

Im gezeigten Ausführungsbeispiel ist die Verbindung der Leuchteinrichtung 28 mit der Ladeplattform 12 so getroffen, dass der innere Teil 48 des horizontalen Schenkels 34 jedes leistenartigen Halters 32 jeweils einen äußeren, streifenartigen Randabschnitt jeder Seite der Deckwandung 15 überlappt. Dann begrenzt die innenliegende Kante des inneren Teils 48 des jeweiligen Schenkels 34 eine der gegenüberliegenden Seiten der Nutzfläche 14. Es ist auch denkbar, dass dort, wo der innere Teil 48 des horizontalen Schenkels 34 die Deckwandung 15 überlappt, eine Vertiefung in der Oberseite der Deckwandung 15 vorhanden ist, so dass die Oberseite des horizontalen Schenkels 34 des leistenartigen Halters 32 bündig mit der Oberseite der Deckwandung 15 abschließt. Dann bildet mindestens auch die Oberseite des inneren Teils 48 des horizontalen Schenkels 34 äußere Bereiche der Nutzfläche 14. Alternativ wäre es auch denkbar, den leistenartigen Halter 32 mit seinem entsprechend verkürzten horizontalem Schenkel 34 und gegebenenfalls eine Abwinklung dieses Schenkels 34 an der senkrechten Fläche des Seitenrands 13 der Deckwandung 15 zu befestigen.

Zumindest der leistenartige Halter 32 des Leuchtmittelträgers 31 ist aus einem wenigstens teilweise lichtdurchlässigen Material, insbesondere Kunststoff, gebildet. Wenn das Material teildurchsichtig ist, dient es als Streuscheibe zur Vergleichmäßigung des von den Lichtquellen des Leuchtmittels 29 abgesandten Lichts. Die vom Leuchtmittel 29 bzw. Lichtleitkörper 46 ausgehenden Lichtstrahlen 47 durchleuchten den über dem Aufnahmeraum 45 liegenden bzw. den den Aufnahmeraum 45 oben begrenzenden Teil 49 des horizontalen Schenkels 34 des leistenartigen Halters 32. Dadurch werden auf der Ladeplattform 12, insbesondere auf beiden Seiten neben der Nutzfläche 14, die in einer horizontalen Ebene flachliegenden, durchleuchteten horizontalen Randstreifen und/oder Leuchtstreifen 30 gebildet, die Bedienungspersonen auf der Ladeplattform 12 vor allem bei schlechter Sicht und Dunkelheit visuell die gegenüberliegenden Ränder der Deckwandung 15 und/oder Nutzfläche 14 der Ladeplattform 12 visualisieren.

Es ist auch denkbar, zumindest den horizontalen Schenkel 37 die Trägerleiste 33 des Leuchtmittelträgers 31 aus einem wenigstens teilweise lichtdurchlässigen Material, insbesondere Kunststoff, zu bilden. Dann wird auch der Schenkel 37 durchleuchtet, so dass Licht auch zur gegenüberliegenden Seite nach unten abgestrahlt wird, um Personen neben der Ladeplattform 12 bei schlechter Sicht und/oder Dunkelheit vor dem von der heruntergeklappten Ladeplattform 12 gebildeten Hindernis zu warnen.

Ebenso ist es denkbar, den gesamten Leuchtmittelträger 31, also sowohl den gesamten leistenartigen Halter 32 als auch die gesamte Trägerleiste 33 aus einem mindestens teilweise durchsichtigen Material, insbesondere Kunststoff, zu bilden. Dann kann die jeder Seite 16 der Ladeplattform 12 zugeordnete Leuchteinrichtung 28 neben jedem Seitenrand 13 der Deckwandung 15 der Ladeplattform 12 zu drei Seiten, und zwar nach oben, nach außen und nach unten, Licht abstrahlen. Von solchen Leuchteinrichtungen 28 können Lichtstrahlen über einen halbkreisigen Bereich und einen Abstrahlwinkel von 180° abgegeben werden.

Die Fig. 5 bis 8 zeigen eine Hubladebühne gemäß einem zweiten Ausführungsbeispiel der Erfindung. Die Hubladebühne verfügt über eine Ladeplattform 50, die sich von der Ladeplattform 12 in den Fig. 1 bis 4 darin unterscheidet, dass sie aus stranggegossenen oder stranggepressten Profilen, insbesondere Hohlkammerprofilen, mit flachem rechteckigen Querschnitt gebildet ist. Diese Profile werden im Fachjargon als "Paneele" bezeichnet. Diese Profile bzw. Paneele sind bevorzugt aus Aluminium hergestellt. Hinsichtlich des Hubwerks entspricht die Hubladebühne mit der Ladeplattform 15 derjenigen in den Fig. 1 bis 5.

Aus der Fig. 5 ist erkennbar, dass die Ladeplattform 50 aus mehreren Paneelen 54 zusammengesetzt ist, wobei Längsmittelachsen oder Paneele 54 parallel zur Schwenkachse 22 der Ladeplattform 50 verlaufen. Die Paneele 54 sind durch entsprechend gestaltete Längsseiten durch Verschiebung relativ zueinander formschlüssig verbindbar. Alternativ oder zusätzlich können sie auch verschweißt und/oder verklebt sein. Mindestens die eine hintere Querkante 20 der Ladeplattform 50 bildenden Paneele 54 ist zur Bildung der Plattformspitze keilförmig ausgebildet und verfügt dadurch über ein anderes Profil als die übrigen Paneele 54.

Die rechteckigen Paneele 54 verfügen über eine Deckwandung 15, eine Bodenwandung 55, mit Verbindungsleisten versehene aufrechte Querwandungen und in der Regel offene Stirnseiten. Bei zur Ladeplattform 50 verbundenen Paneelen 54 bilden die oberen Deckwandungen aller Paneele 54 die ebene Deckwandung 15 mit der Nutzfläche 14. Die unteren Deckwandungen aller Paneele 54 bilden eine Bodenwandung 55 der Ladeplattform 50. Die Deckwandung 15 und die Bodenwandung 55 verlaufen abgesehen von der Plattformspitze, die an der hinteren Querkante 20 endet, parallel zueinander. Im Teilschnitt der Fig. 5 ist erkennbar, dass die Paneele 54 im Inneren verrippt sind durch aufrechte und parallel zur Schwenkachse 22 verlaufende rippenartige Trennwände 56.

Auch der Ladeplattform 50 sind auf beiden Seiten 16 Leuchteinrichtungen 51 zugeordnet. Diese Seiten 16 entsprechen den Stirnseiten der Paneele 54. Dabei verfügt auch die aus zusammengesetzten Paneelen 54 gebildete Deckwandung 15 an jeder Stirnseite über einen Seitenrand 13. Einen solchen Seitenrand 13 weist auch die Bodenwandung 55 sowie jede Trennwand 56 auf. Alle Seitenränder 13 liegen in einer senkrechten Ebene, die quer zur Nutzfläche 14 verläuft (Fig. 6). Auf dieser vertikalen Ebene liegen alle offenen Stirnseiten 62 der miteinander verbundenen Paneele 54 zur Bildung der Ladeplattform 50.

Der Fig. 6 kann entnommen werden, wie jeder Seite 15 der Ladeplattform 50 eine der Leuchteinrichtungen 51 zugeordnet ist. Diese Zuordnung ist prinzipiell genauso getroffen wie bei der Ladeplattform 12. Auch ist jede der gleich ausgebildeten Leuchteinrichtungen 51 prinzipiell genauso ausgebildet wie die jeweilige Leuchteinrichtung 28 der Ladeplattform 12. Deswegen werden für gleiche Teile gleiche Bezugsziffern verwendet.

Jede der gleich ausgebildeten, aber - eventuell mit Ausnahme der Anschlusskabel - seitenverkehrt den gegenüberliegenden Seiten 16 der Ladeplattform 50 zugeordneten Leuchteinrichtungen 51 verfügt über einen Leuchtmittelträger 57 und ein Leuchtmittel 52, das dem zuvor beschriebenen Leuchtmittel 29 der Ladeplattform 12 entspricht. Der Leuchtmittelträger 57 der Leuchteinrichtung 51 verfügt über einen kappenartigen Halter 58 und eine Trägerleiste 33, die derjenigen der Fig. 4 entspricht.

Der kappenartige Halter 58 verfügt über einen in Richtung zur jeweiligen Seite 16 der Ladeplattform 50 offenen U-artigen Querschnitt. Dieser ist gebildet aus einem oberen horizontalen Schenkel 59, einem mit Abstand parallel dazu verlaufenden unteren Schenkel 60 und einem vertikalen Steg 61, der die außenliegenden Enden der Schenkel 59 und 60 verbindet. Der kappenartigen Halter 58 ist einstückig ausgebildet, wodurch die Schenkel 59 und 60 und der Steg 61 zusammenhängen. Beispielsweise ist der kappenartige Halter 58 einstückig aus Kunststoff im Extrusionsverfahren hergestellt.

Die sich gegenüberliegenden Innenflächen der parallelen horizontalen Schenkel 59 und 60 weisen einen solchen Abstand auf, der dem Abstand der äußeren Seiten der Deckwandung 15 und der Bodenwandung 55 entspricht (Fig. 6). Die Schenkel 59 und 60 weisen wie der Schenkel 34 des leistenartigen Halters 32 eine Länge auf, dass ein zur Mitte der Ladeplattform 50 weisender Teil jedes Schenkels 59 und 60 außenseitig die Deckwandung 15 und die Bodenwandung 55 überlappt und hiermit durch Schraube, Niete oder andere Verbindungstechniken lösbar verbunden ist. Die äußeren Teile der Schenkel 59 und 60 ragen nach außen gegenüber den Seiten 16, also im Ausführungsbeispiel der Fig. 6 den offenen Stirnseiten 62 der Paneele 54, vor. Dadurch wird der vertikale Steg 61 des kappenartigen Halters 58 von den offenen Stirnseiten 62 der Paneele 54 und/oder der Seite 16 der Ladeplattform 50 beabstandet zur Bildung eines Freiraums 66. Dieser Freiraum 66 wird beim Leuchtmittelträger 57 der Leuchteinrichtung 51 der Ladeplattform 50 dreiseitig umgeben von den über die Deckwandung 15 und Bodenwandung 55 seitlich vorstehenden äußeren Teile der Schenkel 59 und 60 und des Stegs 61 des kappenartigen Halters 58 (Fig. 6). Der die Deckwandung 15 bzw. Bodenwandung 55 überlappende innere Teil jedes Schenkels 59 und 60 sowie der nach außen vorstehende Teil jedes Schenkels 59 und 60 können etwa gleich lang sein, aber auch unterschiedlich lang. Dadurch kann die Breite des im Bereich des überstehenden äußeren Teils jedes Schenkels 59 und 60 gebildeten beleuchteten Randstreifens und/oder Leuchtstreifens 53 den Anforderungen bzw. Bedürfnissen entsprechend festgelegt werden.

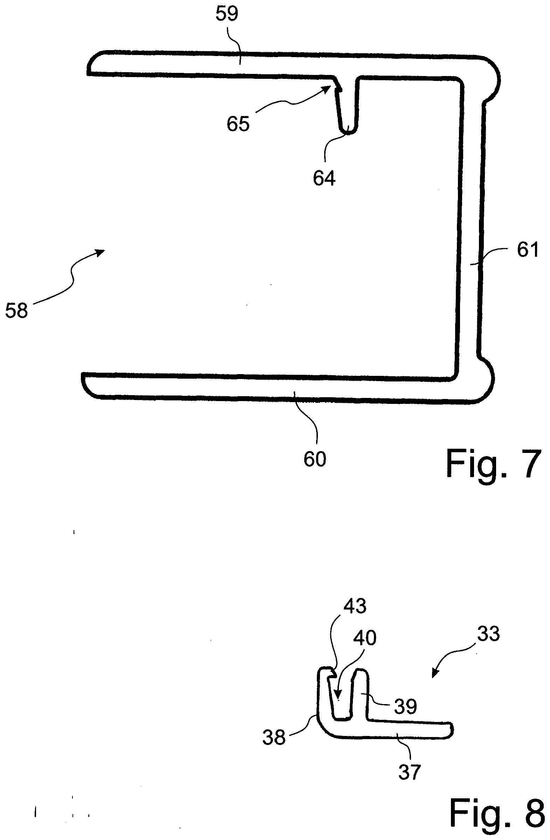

Der in der Fig. 7 gezeigte kappenartige Halter 58 verfügt über einen von der Unterseite des oberen Schenkels 59 ausgehenden vertikalen Schenkel 64. Dieser vertikale Schenkel 64 ist so weit vom Steg 61 des kappenartigen Halters 58 beabstandet, dass er bei montierter Leuchteinrichtung 51 (Fig. 6) so weit von der offenen Stirnseite 62 der Paneele 54 bzw. den Seitenrändern 13 entfernt ist, dass er mit der Trägerleiste 33 verbindbar ist. Dazu weist der Schenkel 64 unterhalb des oberen Schenkels 59 eine Vertiefung 65 in seiner zu den Stirnseiten 62 der Paneele 54 weisenden Seite auf. Diese Vertiefung 65 entspricht der Vertiefung 42 im leistenartigen Halter 32. Auch der Schenkel 64 des kappenartigen Halters 58 ist einstückig an dessen Schenkel 59 angeformt.

Die mit dem senkrechten Schenkel 64 unter dem horizontalen Schenkel 59 jedes kappenartigen Halters 58 lösbar verbindbare Trägerleiste 33 ist im Querschnitt genauso ausgebildet wie im Zusammenhang mit dem Ausführungsbeispiel der Ladeplattform 12 (Fig. 4) beschrieben. Nur ist die Trägerleiste 33 bei der Ladeplattform 50 gedreht, insbesondere um eine vertikale Spiegelachse gespiegelt, im Freiraum 66 zwischen dem Steg 61 und den offenen Stirnseiten 62 der Paneele 54 im kappenartigen Halter 58 angeordnet (Fig. 6). Dabei greift der vom Steg 61 des kappenartigen Halters 58 beabstandete vertikale Schenkel 64 in den Zwischenraum 40 zwischen den Schenkeln 38 und 39 der Trägerleiste 33 ein. Nach Herstellung der Verbindung der das Leuchtmittel 52 tragenden Trägerleiste 33 mit dem kappenartigen Halter 58 greift die Rastnase 43 der Trägerleiste 33 in die dazu korrespondierende Vertiefung 65 im Schenkel 64 des kappenartigen Halters 58 zur Bildung einer Rastverbindung 67 ein (Fig. 6).

Bei mit dem kappenartigen Halter 58 verbundener Trägerleiste 33 bildet der Leuchtmittelträger 57 einen Aufnahmeraum 68 für das Leuchtmittel 52. Dieser Aufnahmeraum 68 ist an allen vier Seiten vom Leuchtmittelträger 57 umgeben, und zwar den Schenkeln 37 und 39 der Trägerleiste 33 sowie einem äußeren Teil des oberen horizontalen Schenkels 59 und einem oberen Teil des vertikalen Stegs 61 des kappenartigen Halters 58 (Fig. 6).

Das wie das Leuchtmittel 29 der Ladeplattform 12 ausgebildete Leuchtmittel 52 der Ladeplattform 50 befindet sich infolge einer gerasteten und/oder gesteckten sowie gegebenenfalls zusätzlich oder auch nur alternativ geklebten Verbindung der das Leuchtmittel 52 tragenden Trägerleiste 33 mit dem kappenartigen Halter 58 im Aufnahmeraum 68 der jeweiligen Leuchteinrichtung 51, wodurch es auf beiden Seiten neben der Deckwandung 15 und/oder Nutzfläche 14 der Ladeplattform 50 liegende Teile des oberen horizontalen Schenkels 59 jedes kappenartigen Halters 58 aus jedem Aufnahmeraum 68 heraus von unten her anleuchtet. Gleichermaßen wird ein oberer Teil des vertikalen Stegs 61 vom Aufnahmeraum 68 her angeleuchtet. Dieser Teil des Stegs 61 befindet sich zwischen dem horizontalen Schenkel 37 der Trägerleist 33 und dem oberen horizontalen Schenkel 59 des kappenartigen Halters 58. Infolge der lichtdurchlässigen Ausbildung des kappenartigen Halters 58 scheint das vom mindestens einen Leuchtmittel 52 der Leuchteinrichtung 51 erzeugte Licht durch den betreffenden Teil des horizontalen Schenkels 59 und des vertikalen Stegs 61 des kappenartigen Halters 58 hindurch. Aufgrund dessen erzeugt jede Leuchteinrichtung 51 an beiden Seiten 16 der Ladeplattform 50 nicht nur einen in der Ebene der Nutzfläche 14 bzw. Deckwandung 15 liegenden oder mit Abstand parallel darüber verlaufenden horizontalen Leuchtstreifen 53, sondern auch einen senkrecht zur Nutzfläche 14 verlaufenden Leuchtstreifen 69. Dieser in einer senkrechten Ebene liegende Leuchtstreifen 69 beleuchtet Außenseiten der Ladeplattform 50. Demzufolge ist es mit der Ladeplattform 50 möglich, Personen auf der Ladeplattform 50 durch die an gegenüberliegenden Seiten 16 derselben gebildeten horizontalen Leuchtstreifen 53 die Ränder bzw. Grenzen in der Nutzfläche 14 visuell darzustellen. Durch die vertikalen Leuchtstreifen 69 an beiden Seiten 16 und/oder Außenseiten der Ladeplattform 50 können sich neben der Ladeplattform 50 befindende Personen auf die Ladeplattform 50 und das dadurch gebildete Hindernis hingewiesen werden.

Das Leuchtmittel 52 der Leuchteinrichtung 51 kann so ausgebildet sein wie das Leuchtmittel 29. Gleiches gilt hinsichtlich der Lichtdurchlässigkeit für den kappenartigen Halter 58, der insoweit aus einem mindestens teilweise lichtdurchlässigen Material gebildet sein kann wie der leistenartige Halter 32. Insoweit wird auf die vorstehende Beschreibung im Zusammenhang mit der Ladeplattform 12 der Fig. 1 bis 4 Bezug genommen.

Denkbar wäre es auch, den vollständig aus einem lichtdurchlässigen Material, insbesondere Kunststoff, hergestellten kappenartigen Halter 58 oder auch den leistenartigen Halter 32 mit einer inneren und/oder äußeren Beschichtung oder Lackierung zu versehen. Dort, wo die Lackierung oder Beschichtung vorhanden sind, könnte der an sich mindestens teilweise lichtdurchlässige kappenartige Halter 58 und/oder der leistenartige Halter 32 dann lichtundurchlässig sein. Dadurch werden Leuchtstreifen 30, 53 und 69 mit einer gewünschten Kontur und Abmessung gebildet und außerdem festgelegt, wo sich die Leuchtstreifen 30, 53 bzw. 69 befinden sollen, um die Nutzfläche 14 der Hubladebühne 11 randseitig zu beleuchten und/oder vertikale Seiten 16 der Ladeplattform 12 bzw. 50 zu beleuchten. Dann sind gezielt nur solche Bereiche des leistenartigen Halters 32 oder des kappenartigen Halters 58 lichtdurchlässig und/oder durchleuchtbar, die Leuchtstreifen und/oder beleuchtete Bereiche aufweisen sollen.

**Bezugszeichenliste:**

| | | | |
|---|---|---|---|
| 10 | Fahrzeugaufbau | 42 | Vertiefung |
| 11 | Hubladebühne | 43 | Rastnase |
| 12 | Ladeplattform | 44 | tragende Struktur |
| 13 | Seitenrand | 45 | Aufnahmeraum |
| 14 | Nutzfläche | 46 | Lichtleitkörper |
| 15 | Deckwandung | 47 | Lichtstrahl |
| 16 | Seite | 48 | innerer Teil |
| 17 | Fahrtrichtung | 49 | äußerer Teil |
| 18 | vordere Querkante | 50 | Ladeplattform |
| 19 | Plattformträger | 51 | Leuchteinrichtung |
| 20 | hintere Querkante | 52 | Leuchtmittel |
| 21 | Hubwerk | 53 | Leuchtstreifen |
| 22 | Schwenkachse | 54 | Paneel |
| 23 | Tragrohr | 55 | Bodenwandung |
| 24 | Längsträger | 56 | Trennwand |
| 25 | Lenkerarm | 57 | Leuchtmittelträger |
| 26 | Hydraulikzylinder | 58 | kappenartiger Halter |
| 27 | Hydraulikzylinder | 59 | Schenkel |
| 28 | Leuchteinrichtung | 60 | Schenkel |
| 29 | Leuchtmittel | 61 | Steg |
| 30 | Leuchtstreifen | 62 | offene Stirnseite |
| 31 | Leuchtmittelträger | 64 | Schenkel |
| 32 | leistenartiger Halter | 65 | Vertiefung |
| 33 | Trägerleiste | 66 | Freiraum |
| 34 | Schenkel | 67 | Rastverbindung |
| 35 | Schenkel | 68 | Aufnahmeraum |
| 36 | Längskante | 69 | Leuchtstreifen |
| 37 | Schenkel | | |
| 38 | Schenkel | | |
| 39 | Schenkel | | |
| 40 | Zwischenraum | | |
| 41 | Rastverbindung | | |

## Patentansprüche

1. Hubladebühne für ein Fahrzeug mit einer Ladeplattform (12, 50) und einem Hubwerk (21) zum wahlweisen Heben, Senken und Verschwenken der Ladeplattform (12, 50) um eine horizontale Schwenkachse (22), wobei die Ladeplattform (12, 50) eine eine Oberfläche bildende Deckwandung (15) mit zwei gegenüberliegenden, quer zur Schwenkachse (22) verlaufenden Seitenrändern (13) aufweist, und mindestens ein Teil der Deckwandung (15) eine Nutzfläche (14) der Ladeplattform (12, 50) bildet, wobei neben den Seitenrändern (13) der Deckwandung (15) der Ladeplattform (12, 50) jeweils eine Leuchteinrichtung (28, 51) zur Erzeugung eines mindestens nach oben, also von der Oberfläche weggerichtet, Licht abstrahlenden Randstreifens angeordnet ist, wobei jede Leuchteinrichtung (28, 51) einen Leuchtmittelträger (31, 57) und mindestens ein Leuchtmittel (29, 52) aufweist, wobei der jeweilige Leuchtmittelträger (31, 57) eine Trägerleiste (33) für das jeweils mindestens eine Leuchtmittel (29, 52) der Leuchteinrichtung (28, 51) aufweist, 1f
**dadurch gekennzeichnet, dass**
der jeweilige Leuchtmittelträger (31, 57) einen kappenartigen Halter (58) oder einen leistenartigen Halter (32) aufweist, wobei die jeweilige Trägerleiste (33) lösbar mit dem jeweiligen leistenartigen Halter (32) oder kappenartigen Halter (58) verbindbar ist, und wobei der jeweilige Halter (32, 58) mindestens teilweise aus einem lichtdurchlässigen Material gebildet ist.

2. Hubladebühne nach Anspruch 1, **dadurch gekennzeichnet, dass** an jeder Seite der Deckwandung (15) und einer davon beabstandeten Bodenwandung (55) der Ladeplattform (50) der Leuchtmittelträger (57) mit einem kappenartigen Halter (58) für das mindestens eine Leuchtmittel (52) angeordnet ist.

3. Hubladebühne nach einem der vorhergehenden Ansprüche, **dadurch gekennzeichnet, dass** jede Leuchteinrichtung (28, 51) mit ihrem Leuchtmittelträger (31, 57), vorzugsweise dem kappenartigen Halter (58) oder dem leistenartigen Halter (32) des jeweiligen Leuchtmittelträger (31, 57), mit einem Seitenrand der Deckwandung verbunden ist.

4. Hubladebühne nach einem der vorhergehenden Ansprüche, **dadurch gekennzeichnet, dass** jeder Leuchtmittelträger (31, 57) einen das ihm zugeordnete Leuchtmittel (29, 52) mindestens dreiseitig umgebenden Aufnahmeraum (45, 68) neben der jeweiligen Seite (16) der Ladeplattform (12, 50) und/oder jedem Seitenrand (13) der Deckwandung (15) der Ladeplattform (12, 50) bildet und/oder aufweist.

5. Hubladebühne nach einem der vorhergehenden Ansprüche, **dadurch gekennzeichnet, dass** jeder Halter (32, 58) mindestens einen horizontalen, parallel zur Deckwandung (15) und/oder Nutzfläche (14) verlaufenden Schenkel (34, 59) aufweist, der mit einem Teil mit der Deckwandung (15) und/oder der Nutzfläche (14) der Ladeplattform (12, 50) verbunden ist und mit einem anderen, äußeren Teil (49) seitlich gegenüber dem Seitenrand (13) und/oder der jeweiligen Seite (16) der Ladeplattform (12, 50) vorsteht.

6. Hubladebühne nach Anspruch 5, **dadurch gekennzeichnet, dass** unter dem vorstehenden äußeren Teil (49) des einzigen horizontalen Schenkels (34) des leistenartigen Halters (32) oder dem oberen horizontalen Schenkel (59) des kappenartigen Halters (58) die Trägerleiste (33) mit dem mindestens einen ihr zugeordneten Leuchtmittel (29, 52) angeordnet und/oder befestigt ist.

7. Hubladebühne nach einem der vorhergehenden Ansprüche, **dadurch gekennzeichnet, dass** der jeweilige Halter (32, 58) vollständig aus einem lichtdurchlässigen Material, insbesondere lichtdurchlässigen Kunststoff, gebildet ist.

8. Hubladebühne nach einem der vorhergehenden Ansprüche, **dadurch gekennzeichnet, dass** die jeweilige Leuchteinrichtung (28, 51) mindestens ein Leuchtmittel (29, 52) aufweist, wobei das jeweilige Leuchtmittel (29, 52) wenigstens einen Leuchtstreifen (30, 53) aufweist und/oder als wenigstens ein Leuchtstreifen (30, 53) ausgebildet ist, welcher Leuchtstreifen (30, 53) vorzugsweise eine Mehrzahl von Lichtquellen, insbesondere Leuchtdioden, aufweist.

9. Hubladebühne nach einem der vorhergehenden Ansprüche, **dadurch gekennzeichnet, dass** das wenigstens eine Leuchtmittel (29, 52) mindestens einen Lichtleiter aufweist, wobei vorzugsweise dem mindestens einen Lichtleiter wenigstens eine Lichtquelle bzw. Leuchtdiode zugeordnet ist, die Licht in den jeweiligen Lichtleiter einkoppelt.

10. Hubladebühne nach Anspruch 8 oder 9, **dadurch gekennzeichnet, dass** der wenigstens eine Leuchtstreifen (30, 53) und/oder der mindestens eine Lichtleiter, vorzugsweise als mindestens ein Lichtleitkörper ausgebildeter Lichtleiter, durchgehend über die gesamte Länge oder nur einen Teil, vorzugsweise Großteil, der Trägerleiste (3) und/oder der Leuchteinrichtung (28, 51) verläuft.

## Claims

1. Tail lift for a vehicle, having a loading platform (12, 50) and a lifting mechanism (21) for selectively lifting, lowering and pivoting the loading platform (12, 50) about a horizontal pivot axis (22), wherein the loading platform (12, 50) has a top wall (15) forming a surface and having two opposite side peripheries (13) running transversely with respect to the pivot axis (22), and at least part of the top wall (15) forms a useful surface (14) of the loading platform (12, 50), wherein arranged next to the side peripheries (13) of the top wall (15) of the loading platform (12, 50) is a respective lighting device (28, 51) for generating a peripheral strip which emits light at least upwards, that is to say directed away from the surface, wherein each lighting device (28, 51) has an illuminant carrier (31, 57) and at least one illuminant (29, 52), wherein the respective illuminant carrier (31, 57) has a carrier strip (33) for the respective at least one illuminant (29, 52) of the lighting device (28, 51),
**characterized in that**
the respective illuminant carrier (31, 57) has a cap-like holder (58) or a strip-like holder (32), wherein the respective carrier strip (33) is releasably connectable to the respective strip-like holder (32) or cap-like holder (58), and wherein the respective holder (32, 58) is at least partially formed from a light-permeable material.

2. Tail lift according to Claim 1, **characterized in that** arranged on each side of the top wall (15) and of a bottom wall (55), spaced apart therefrom, of the loading platform (50) is the illuminant carrier (57) with a cap-like holder (58) for the at least one illuminant (52).

3. Tail lift according to either of the preceding claims, **characterized in that** each lighting device (28, 51) is connected by way of its illuminant carrier (31, 57), preferably the cap-like holder (58) or the strip-like holder (32) of the respective illuminant carrier (31, 57), to a side periphery of the top wall.

4. Tail lift according to one of the preceding claims, **characterized in that** each illuminant carrier (31, 57) forms and/or has a receiving space (45, 68), which surrounds at least three sides of the illuminant (29, 52) assigned thereto, next to the respective side (16) of the loading platform (12, 50) and/or each side periphery (13) of the top wall (15) of the loading platform (12, 50).

5. Tail lift according to one of the preceding claims, **characterized in that** each holder (32, 58) has at least one horizontal limb (34, 59) which runs parallel to the top wall (15) and/or useful surface (14), one part of which is connected to the top wall (15) and/or to the useful surface (14) of the loading platform (12, 50) and another, outer part (49) of which protrudes laterally in relation to the side periphery (13) and/or the respective side (16) of the loading platform (12, 50).

6. Tail lift according to Claim 5, **characterized in that** the carrier strip (33) with the at least one illuminant (29, 52) assigned thereto is arranged and/or fastened under the protruding outer part (49) of the single horizontal limb (34) of the strip-like holder (32) or the upper horizontal limb (59) of the cap-like holder (58) .

7. Tail lift according to one of the preceding claims, **characterized in that** the respective holder (32, 58) is completely formed from a light-permeable material, in particular light-permeable plastic.

8. Tail lift according to one of the preceding claims, **characterized in that** the respective lighting device (28, 51) has at least one illuminant (29, 52), wherein the respective illuminant (29, 52) has at least one light strip (30, 53) and/or is in the form of at least one light strip (30, 53), which light strip (30, 53) preferably has a plurality of light sources, in particular light-emitting diodes.

9. Tail lift according to one of the preceding claims, **characterized in that** the at least one illuminant (29, 52) has at least one light guide, wherein the at least one light guide is preferably assigned at least one light source or light-emitting diode which couples light into the respective light guide.

10. Tail lift according to Claim 8 or 9, **characterized in that** the at least one light strip (30, 53) and/or the at least one light guide, preferably a light guide in the form of at least one light guiding body, runs continuously over the entire length or only a part, preferably a large part, of the carrier strip (3) and/or of the lighting device (28, 51).

## Revendications

1. Hayon élévateur pour un véhicule avec une plate-forme de chargement (12, 50) et un mécanisme de levage (21) pour lever, abaisser et faire pivoter au choix la plate-forme de chargement (12, 50) autour d'un axe de pivotement horizontal (22), la plate-forme de chargement (12, 50) présentant une paroi de recouvrement (15) formant une surface avec deux bords latéraux opposés, (13) s'étendant transversalement à l'axe de pivotement (22), et au moins une partie de la paroi de recouvrement (15) formant une surface utile (14) de la plate-forme de chargement (12, 50), un dispositif d'éclairage (28, 51) étant agencé à côté de chacun des bords latéraux (13) de la paroi de recouvrement (15) de la plate-forme de chargement (12, 50) pour produire une bande de bord émettant de la lumière au moins orientée vers le haut, c'est-à-dire à l'opposé de la surface, chaque dispositif d'éclairage (28, 51) présentant un support de moyen d'éclairage (31, 57) et au moins un moyen d'éclairage (29, 52), le support de moyen d'éclairage respectif (31, 57) présentant une baguette de support (33) pour l'au moins un moyen d'éclairage respectif (29, 52) du dispositif d'éclairage (28, 51),
**caractérisé en ce que**
le support de moyen d'éclairage respectif (31, 57) présente un soutien de type capuchon (58) ou un soutien de type baguette (32), la baguette de support (33) respective pouvant être reliée de manière amovible au soutien de type baguette (32) ou au soutien de type capuchon (58) respectif, et le soutien (32, 58) respectif étant formé au moins partiellement d'un matériau translucide.

2. Hayon élévateur selon la revendication 1, **caractérisé en ce que** de chaque côté de la paroi de recouvrement (15) et d'une paroi de fond (55) de la plate-forme de chargement (50) espacée de celle-ci, le support de moyen d'éclairage (57) est agencé avec un soutien de type capuchon (58) pour l'au moins un moyen d'éclairage (52) .

3. Hayon élévateur selon l'une quelconque des revendications précédentes, **caractérisé en ce que** chaque dispositif d'éclairage (28, 51) est relié par son support de moyen d'éclairage (31, 57), de préférence le soutien de type capuchon (58) ou le soutien de type baguette (32) du support de moyen d'éclairage respectif (31, 57), à un bord latéral de la paroi de recouvrement.

4. Hayon élévateur selon l'une quelconque des revendications précédentes, **caractérisé en ce que** chaque support de moyen d'éclairage (31, 57) forme et/ou présente un espace de réception (45, 68) entourant au moins sur trois côtés le moyen d'éclairage (29, 52) qui lui est associé, à côté du côté respectif (16) de la plate-forme de chargement (12, 50) et/ou de chaque bord latéral (13) de la paroi de recouvrement (15) de la plate-forme de chargement (12, 50).

5. Hayon élévateur selon l'une quelconque des revendications précédentes, **caractérisé en ce que** chaque soutien (32, 58) présente au moins une branche horizontale (34, 59) parallèle à la paroi de recouvrement (15) et/ou à la surface utile (14), dont une partie est reliée à la paroi de recouvrement (15) et/ou à la surface utile (14) de la plateforme de chargement (12, 50) et dont une autre partie, extérieure (49), fait saillie latéralement par rapport au bord latéral (13) et/ou à chaque côté (16) de la plateforme de chargement (12, 50).

6. Hayon élévateur selon la revendication 5, **caractérisé en ce que** sous la partie extérieure en saillie (49) de l'unique branche horizontale (34) du soutien de type baguette (32) ou de la branche horizontale supérieure (59) du soutien de type capuchon (58) est agencée et/ou fixée la baguette de support (33) avec l'au moins un moyen d'éclairage (29, 52) qui lui est associé.

7. Hayon élévateur selon l'une quelconque des revendications précédentes, **caractérisé en ce que** chaque soutien (32, 58) est entièrement formé d'un matériau translucide, notamment d'une matière plastique translucide.

8. Hayon élévateur selon l'une quelconque des revendications précédentes, **caractérisé en ce que** le dispositif d'éclairage respectif (28, 51) présente au moins un moyen d'éclairage (29, 52), le moyen d'éclairage respectif (29, 52) présentant au moins une bande lumineuse (30, 53) et/ou étant configuré sous la forme d'au moins une bande lumineuse (30, 53), laquelle bande lumineuse (30, 53) présente de préférence une pluralité de sources de lumière, notamment des diodes électroluminescentes.

9. Hayon élévateur selon l'une quelconque des revendications précédentes, **caractérisé en ce que** l'au moins un moyen d'éclairage (29, 52) présente au moins un guide de lumière, au moins une source de lumière ou une diode électroluminescente étant de préférence associée à l'au moins un guide de lumière, laquelle injecte de la lumière dans le guide de lumière respectif.

10. Hayon élévateur selon la revendication 8 ou 9, **caractérisé en ce que** l'au moins une bande lumineuse (30, 53) et/ou l'au moins un guide de lumière, de préférence un guide de lumière configuré sous la forme d'au moins un corps de guide de lumière, s'étend en continu sur toute la longueur ou seulement sur une partie, de préférence une grande partie, de la baguette de support (3) et/ou du dispositif d'éclairage (28, 51).
